Europäisches Patentamt

(19) European Patent Office

Office européen des brevets

(11) Publication number: 0 104 008
A1

# (12) EUROPEAN PATENT APPLICATION

(21) Application number: 83304935.6

(22) Date of filing: 25.08.83

(51) Int. Cl.³: **B 23 C 5/26**

(30) Priority: 03.09.82 US 414596

(43) Date of publication of application:
28.03.84 Bulletin 84/13

(84) Designated Contracting States:
CH DE FR GB LI

(71) Applicant: HURCO MANUFACTURING COMPANY, INC.
6602 Guion Road Post Office Box 68180
Indianapolis Indiana 46268(US)

(72) Inventor: O'Brien, Richard L.
8130 East 11th Street
Indianapolis Indiana 46219(US)

(72) Inventor: Dorn, John V.
2752 Earlham Lane
Indianapolis Indiana 46231(US)

(74) Representative: Bannerman, David Gardner et al,
Withers & Rogers 4 Dyer's Buildings Holborn
London, EC1N 2JT(GB)

(54) Machine tool spindle stop and tool release mechanism.

(57) A milling machine is equipped with an automatic tool changer which can remove and install tooling in a stationary spindle. A shot pin is axially drivable into a detent in the spindle drive pulley flange to precisely stop spindle rotation at a desired index position for tool changing. A shot pin lubricator is provided in the pulley flange. To enable a tool change, the spindle is moved into and out of operative relationship with a powered tool release actuator assembly secured to the head. A coil spring provides the tool holding collet closing load. Therefore, a modest sized actuator serves to open the collet.

Fig. 1

EP 0 104 008 A1

-1-

## MACHINE TOOL SPINDLE STOP AND
## TOOL RELEASE MECHANISM

### Background of the Invention

### Field of the Invention

This invention relates generally to milling machines and more particularly to a method and apparatus for stopping spindle rotation and for securing a tool holder in the spindle, and releasing the tool holder from the spindle.

### Description of the Prior Art

Milling machines are well known and widely used. Modern milling machines have the ability to provide relative movement between a cutter and the workpiece on three axes, the so-called "X-axis", "Y-axis" and "Z-axis". Many machines have the capability of providing movements in combinations of these directions automatically during operations on a workpiece.

In the constant effort to facilitate and expedite operations on a milling machine, automatic tool changers have become significant. They automatically move different cutting tools from a storage magazine into and out of the machine spindle as different operations on the workpiece dictate the use of different tools. Many types of such tool changers are known and in use. Usually they require some means for automatically gripping and releasing a tool holder in the spindle. One example is illustrated in U. S. Patent No. 4,304,513 issued December 8, 1981 to Gerald V. Roch. In that patent, a tool holder 152 is secured in the spindle by a collet member 149 urged upwardly by a stack of Belleville spring washers 147. When it is desired to release the tool holder, the collet is driven downward against the resistance of the spring stack by pneumatic pressure applied to a piston 131. This whole assembly is mounted to the spindle head 25 which is driven up and down (the Z-axis direction of travel) on the machine frame 24 by a suitable powered lead screw and ball nut assembly.

The above-mentioned Roch patent also discloses a means for stopping rotation of the spindle in a precise index position. This is described in column 9 at lines 52 and following. FIG. 9 shows an indentation 90 in coupling 81 splined to the spindle. An air cylinder 91, when energized, drives plunger 92 toward coupling 81 whereupon plug 92b engages the slowly turning spindle and will seat in the detent or indentation 90 in the coupling to stop the spindle. The stoppage of spindle rotation at a particular index position is of importance where an automatic tool changer requires specific tool holder index for transfer of tools between the spindle and the tool storage means.

While the above-mentioned apparatus in the Roch patent has served very well in the machines in which it has been used, there is a need for automatic tool changers on smaller machines. It is desirable to be able to make machines not only smaller in size, but also lighter in weight, while still providing the power and rigidity necessary to perform the desired work on a workpiece. The prior art known to us is not well suited to adaptation to machines having the smaller size and related constraints of small milling machines on which it is desirable to provide automatic tool changers. The present invention is directed to overcoming this problem.

0104008

-4-

## Summary of the Invention

Described briefly, according to a typical embodiment of the present invention, a milling machine is provided with a tool holder collet which is axially loaded by spring means having a relatively low K factor. The powered mechanism for release of the collet is mounted to the spindle head and is involved with the spindle and collet only when a tool holder release function is to be performed. A spindle stopping mechanism includes a locking plunger with operating axis substantially parallel to the spindle axis and positioned entirely within a space dictated by spindle drive requirements and yet located to engage a spindle drive component at a substantial radius to provide a large mechanical advantage and precise spindle orientation upon stopping it. A long-term, no-bleed lubrication feature is provided for the spindle stop plunger.

-5-

## Brief Description of the Drawings

FIG. 1 is schematic side elevational view of a milling machine with spindle stop and tool release mechanism according to our present invention.

FIG. 2 is an enlarged fragmentary top plan view of a portion thereof taken at line 2-2 in FIG. 1 and viewed in the direction of the arrows.

FIG. 3A is a section of the lower portion of the machine head assembly taken at line 3A-3A in FIG. 2 and viewed in the direction of the arrows, showing the spindle and stop assembly.

FIG. 3B is a section of the upper portion of the machine head assembly taken at line 3B-3B in Fig. 2 and viewed in the direction of the arrows and showing the tool release drive mechanism.

FIG. 3C is a view like FIG. 3B except that it shows the actuator piston assembly in the fully-up and spindle grippers in the fully-open spread condition.

FIG. 4 is an enlarged top plan view of the spindle drive pulley flange with stop detent.

FIG. 5 is a view of the pulley flange with a portion in section taken at line 5-5 in FIG. 4 and viewed in the direction of the arrows.

FIG. 6 is a top plan view of a spline coupler bearing cap and shot pin guide.

FIG. 7 is a fragmentary side elevational view of a portion of the quill draw bar and key taken at lines 7-7 in FIG. 3A and viewed in the direction of arrows.

## Description of the Preferred Embodiment

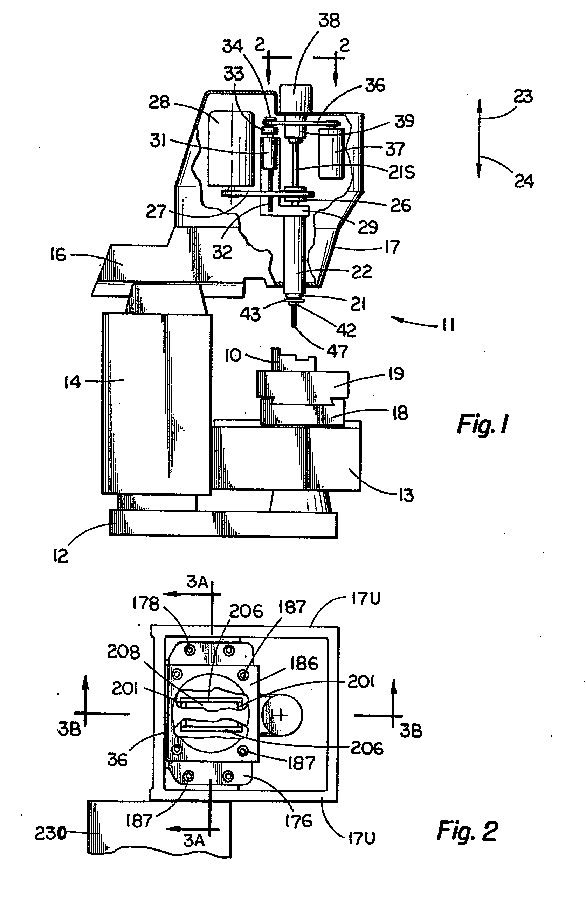

Referring now to the drawings in detail, FIG. 1 shows a knee-type milling machine 11 having a base 12, knee 13 column assembly 14 including machine control computer and electronics, overarm 16, and head 17. A saddle 18 is mounted on knee 13, and worktable 19 is mounted on the saddle 18. A spindle 21 is rotatably received in a non-rotatable quill 22 mounted in the head for vertical (Z-axis) movement up and down in the directions of arrows 23 and 24, respectively.

The spindle is splined at 21S and receives a spline coupler 26 thereon driven by a toothed belt 27. One brand of belt is known in the trade as an HTD belt manufactured by Uniroyal, Inc. The spindle drive motor assembly 28 is mounted in the head assembly and includes an output shaft rotational index sensor electrically coupled to the machine control. The spindle is mounted in the quill in a way to be described, which prevents linear movement of the spindle relative to the quill.

The vertical support for the quill is provided by a quill support bracket 29 which is a somewhat L-shaped casting having a recirculating ball nut 31 secured thereto near the upper end of the vertical arm thereof. This nut is received on a quill drive or Z-axis drive screw 32 mounted to the head assembly in a bearing assembly 33 to prevent any movement of the screw other than rotation in the head assembly. This screw has a sprocket 34 attached to the upper end of it which is driven by a timing belt 36 driven by the vertical or Z-axis servo drive motor 37 which is secured in the head assembly. This servo drive motor and others not involved with this invention, and various sensors referred to herein are electrically coupled to the controller.

A tool release actuator assembly 38 is secured to the top of the head assembly and has a gripper assembly 39 secured to the head assembly below it.

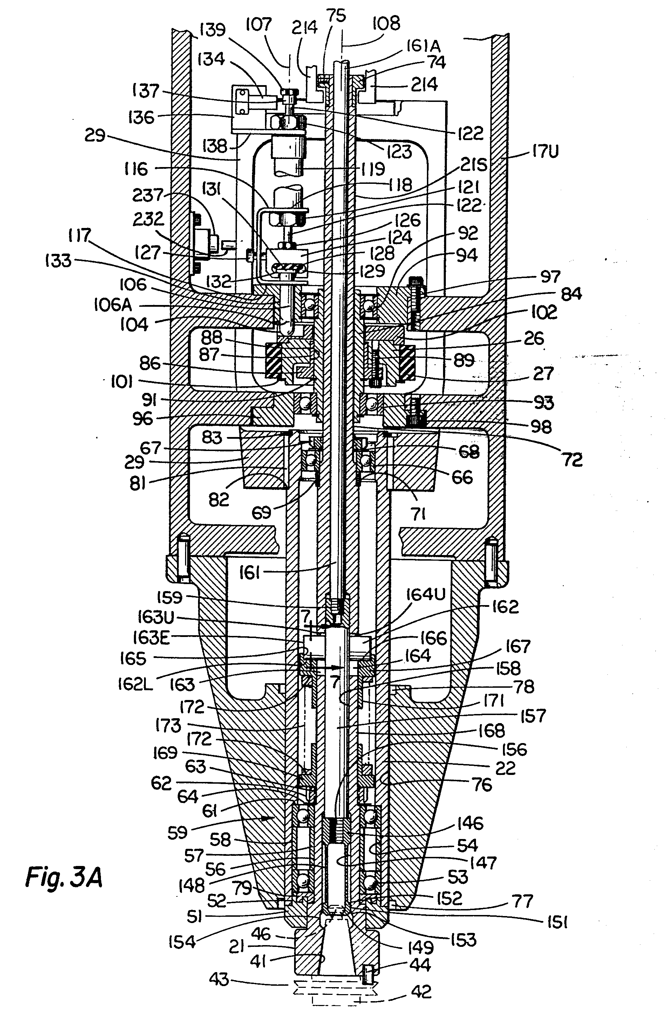

Referring specifically to FIG. 3A, the lower end of spindle 21 is provided with a conical or tapered entrance at 41. This fits the standard No. 30 V-flange tool holder 42. The flange 43 is properly indexed by the reception of the spindle key 44 in the notch in the flange. The tool holder is retained in the spindle by the tool retention knob 46 secured to the upper end thereof. A tool 47 (FIG. 1) is secured in the tool holder.

Referring again to Fig. 3A, a lower bearing retainer nut 51 threaded into the quill 22 at 52 supports the spindle lower ball bearing assembly 53 whose outer race is fittingly received in the bore 54 of the quill and whose inner race is fittingly received on the step 56 of the spindle. Inner and outer bearing spacer tubes 57 and 58 are received on the inner and outer races, respectively of the lower bearing assembly and support the inner and outer races of the intermediate spindle bearing assembly 59, whose outer race abuttingly engages the shoulder 61 in the quill. The inner race is tightened downward against the spacer sleeve 57 by the lock nut 62 threadedly received on the spindle at 63, there being a washer 64 between the lower end of this nut and the inner race of bearing assembly 59. Accordingly, the spindle is fixed longitudinally relative to the quill, but rotationally free in the quill.

Radial support and control of the spindle relative to the quill at the upper end is provided by the spindle upper bearing assembly 66 whose outer race pilot in the quill and inner race pilots on the spindle and is clamped between the bearing retainer nut 67, washer 68 and ring 69 abutting the shoulder 71 on the spindle. The exterior of the spindle is splined from a point 72 upward to the flange nut 74 threadedly received on the upper end of the spindle. This nut is locked to the spindle by a set screw 75.

The quill is slip fitted in the bore 76 of the head housing, and rod wiper seals can be provided between the housing and the quill at 77 and 78, if desired. A labyrinth dirt seal is provided at 79 between the spindle and retainer nut 51. The quill support casting 29 is split and clamped to the upper end of the quill at 81 and located between the shoulder 82 on the quill and the retainer rings 83 received in the external circular groove at the upper end of the quill. Accordingly, as the quill support casting 29 is driven up or down by the vertical servo drive screw, the quill is driven up or down.

As mentioned above, the spindle is driven by the belt 27. This belt runs on a sprocket 26. A spline coupler 84 is slidably received on the splined portion of the spindle. The sprocket 26 is secured to the splined coupler by a wedge collar 86 having an external taper 87 received in the tapered bore 88 of sprocket 26. Three circularly spaced cap screws 89 (only one being shown in the drawing) pull the sprocket 26 onto the collar taper 87 and thereupon clamp the collar onto the coupler 84 and the sprocket 26 onto the collar. The location of the collar is established on the spindle by the snap ring 91 in the groove in the coupler. The vertical location of the coupler in the assembly is established by the upper and lower coupler bearing assemblies 92 and 93, respectively, which are located in bearing caps 94 and 96, respectively, fastened to the head casting 17U by cap screws 97 and 98, of which there are usually three, circularly spaced.

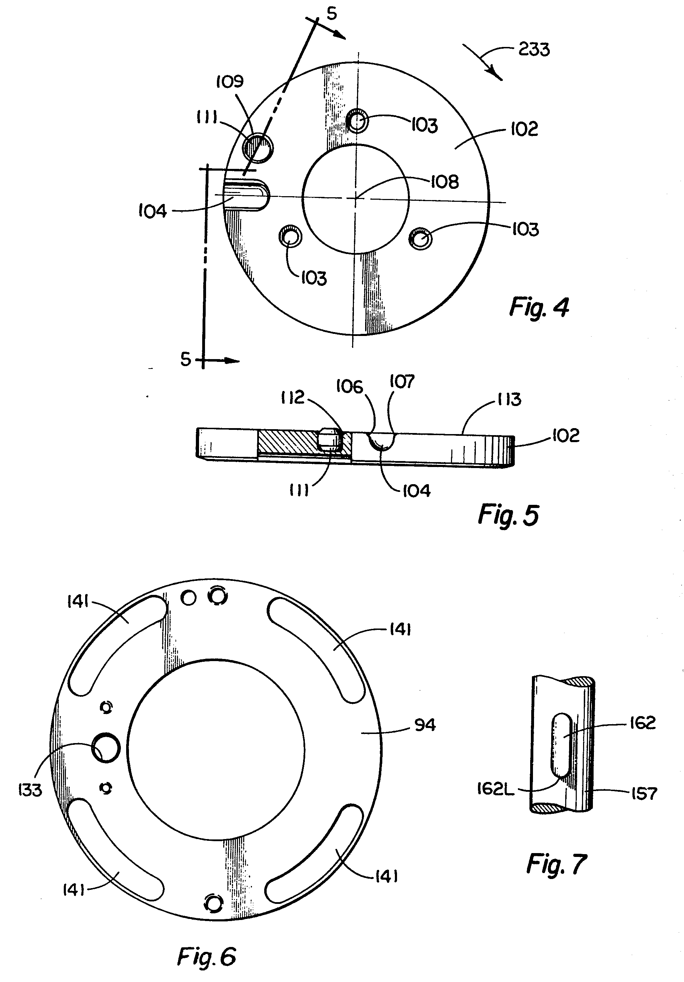

The sprocket 26 has belt retaining side flanges. One of these flanges, 101 is typically shrink fitted to the sprocket. The other flange 102 is made according to a feature of the present invention. It is secured to the sprocket 26 by three circularly spaced screws in holes 103 (FIG. 4). It is provided with a detent cavity 104 in its upper face. This cavity has entrance ramps 106 and 107 at the upper radially projecting edges of the cavity. This cavity receives the lower end of a shot pin 106. This pin is cylindrical and has a cylindrical axis along the axis 107 parallel to the rotational axis 108 of the spindle. FIG. 3A shows the pin in solid lines in the spindle locking position. In shows in dotted lines 106A the shot pin in the normal, spindle release position.

Reference again to FIG. 4 shows a hole 109 with a plug 111 therein. This is provided according to another feature of the invention, and is located at a radius from the center of the spindle equal to the distance between the axis 107 and 108. According to a feature of this invention, the plug is lubricant impregnated, at least at the top. An example is an oil-filled sintered bronze material having a .0005 to .001 inch interference with the hole so that it is force fitted into the hole and the upper face of the plug is between .020 and .030 inches above the surface of the upper face 113 of the disk (Fig. 5). The rotational index of this hole and plug 111 from the center line through the detent cavity 104 is 25 degrees. The center of the plug is normally 1.08 inches from the rotational axis of the flange. So it is seen that flange 102 thereby serves a double purpose of a side stop or guide for the belt 27, and a receiver and lubricator for the spindle stop device.

A shot pin cylinder mounting bracket 116 is fastened by screws (not shown) at 117 to the upper bearing cap 94. The apertured upper arm 118 of the bracket supports the lower end of the air cylinder 119 which is secured thereto by the cylinder head nut 121 whose threaded portion is received through the aperture in the bracket and threaded into the cylinder wall. This is a double acting air cylinder and the piston rod 122 extends through both cylinder head nuts 121 and 123. A shot pin holder block 124 is threaded on the lower end of piston rod 122 and secured in position by the jam nut 126 threaded on the piston rod. A holder block guide pin 127 extends through a vertically extending slot (not shown) in the bracket 116 so that it is guided as it is driven up and down by the piston in the air cylinder.

A urethane cushion 128 is provided in the slot 129 in holder block 124. This slot receives the head flange 131 of the shot pin. The urethane cushion 128 snugly fits between the top of the flange and the bottom of the holder over the shot pin, to urge the flange against the circular shoulder 132 at the bottom of the holder block 124. This shoulder extends 180 degrees around the body of the shot pin and thus enables insertion of the shot pin laterally into the holder, and loading of the shot pin flange 131 against the cushion and shoulder 132 so that it will not slip out in use. Also, the shot pin is piloted in an aperture 133 in the bearing cap 194.

A sensor switch 134 is mounted to a switch support bracket 136 whose horizontally extending forked or apertured flange 138 is fittingly received and secured between the upper end of the air cylinder and the cylinder head cap nut 123. A sensor mass 137 is threadedly received on the upper end of the piston rod 122 and secured in position thereon by a jam nut 139 threadedly received on the upper end of the piston rod 122.

The above mentioned V-flanged tool holders have one, or two diametrically opposite notches in the flanges thereof to receive the index key of a tool changer finger to provide and maintain correct tool rotational index during transfer from a storage magazine to the spindle. The key 44 in the spindle must be aligned with the key in the tool changer finger at the tool transfer time. In order to facilitate the alignment of the tool changer finger key with the spindle key at the tool change event, it is necessary that the shot pin index position be precisely aligned with the center of the detent 104. This is facilitated by providing slots 141 in the bearing cap 94 for reception of the cap screws 97 by which the cap is bolted to the head casting 17U. Accordingly, with the tool changer finger locating a tool holder in the spindle, with the keys of the spindle and tool changer finger in facing notches in the tool holder flange, the shot pin can be moved around the spindle axis 108 by turning bearing cap 94 in the housing. When the shot pin is aligned with and, by actuation of the air cylinder, installed in the detent 104, the four cap screws 97 can be tightened down into the housing and thereby correctly index the bearing cap 94 in the housing. A proximity switch suitable for the sensor switch 134 can be one of a variety. An example is one made by the Microswitch Company of Freeport, Illinois, as shown in the catalog sheet number PK8759-1. Such switches can be obtained from Hurco Manufacturing Company, Inc. under catalog number 101XK5-1.

Referring further to FIG. 3A, there is a collet 146 slidingly received in the internal bore 147 of spindle 21. The collet has spring fingers or jaws 148, two of which are shown. Each of these fingers (typically there are six of them) has an inwardly directed flange 149 at its lower end. That flange engages the underside of the tool retention knob 46 of the tool holder. A collet finger locator surface 151 on each finger, typically semi-cylindrical, is received in the lower portion of the cylindrical wall 147 in the spindle when the collet is in the closed position. The finger closing cam surface 152 of the collet is immediately above this surface 151 and, when the collet is in the lower, finger-open position, this surface is immediately below the collet cam ramp closing conical surface 153 in the spindle. This surface is immediately above the collet release space 154 in the spindle.

The collet is internally threaded at 156 and threaded on to the lower stem of a draw bar 157 which is slidingly received and guided in the inner cylindrical surface 158 of the spindle. The upper end of the draw bar is internally threaded at 159 and receives the threaded lower end of the drive bar 161 which is guidingly and slidingly received inside the splined portion of the spindle and projects out of the upper end thereof at 161A.

The draw bar 157 has a narrow longitudinally extending transverse aperture therethrough slidingly and fittingly receiving a key 162 (FIG. 3A and 7) this key projects through longitudinally extending laterally aligned apertures 163 and 164 in the spindle. There is some clearance (typically about .060 inches) between the upper edge of the key and the upper edge of the slot of aperture 163 at 163U for a purpose which will become apparent. Similarly there is a like clearance between the upper edge of the key 162 and the upper edge of aperture 164 in the spindle, at 164U for the same reason. This clearance does not exist between the upper edge of the key and the upper edge of the aperture in the draw bar 157 receiving it.

The lower edge 162L of the key engages a collared annular upper face 166 of the upper spring seat collar bushing 167. The cylindrical shoulder 165 in this bushing abuttingly engages and confines the opposite ends 162E of the key 162. The bushing 167 is slidably received on the outer cylindrical surface 168 of the spindle. A similar bushing, the lower spring seat bushing 169 is slidingly received on the spindle surface 168 and abuttingly engages the upper face of the bearing lock nut 62. Each of these bushings has a longitudinally extending spring pilot flange such as 171. Also, each of them has a spring seat flange 172 thereon and encircling the spring pilot flange
171. These features make it possible according to another
feature of our invention, to provide a coil spring 173,
instead of the typical Belleville spring stack, to close
the collet. A die spring having wire of square cross
section as shown serves well for this purpose. It bears on
the spring seat flange 172 of the bushing 167 which bears
on the lower edge 162L of the collet operating key 162.
Thereby it urges the key upward tightly against the upper
edge of the key receiver aperture in the collet draw bar
157 and thus urges the collet upward. This results in the
gripper flanges of the collet 149 of the collet fingers
urging upwardly the tool holder retention knob 46 on the
tool holder. It thereby forces the tapered exterior
surface of the tool holder shank against the tapered
interior surface 41 of the spindle. The fitting tapers
prevent further upward movement of the tool holder and,
therefore, of the collet, the fingers being confined by
the holding and guiding internal surface 147 of the
spindle. In the absence of a tool holder in the collet,
the spring force will urge the collet further upward until
the key 162 upper edges engage the upper edges of the
spindle slots 163 and 164, having closed up the clearances
163U and 164U, and thereupon stop further rise of the
collet in the spindle.

Having described the tool holder collet and collet
closing spring, we now proceed to description of the tool
release mechanism, particularly with reference to FIG.

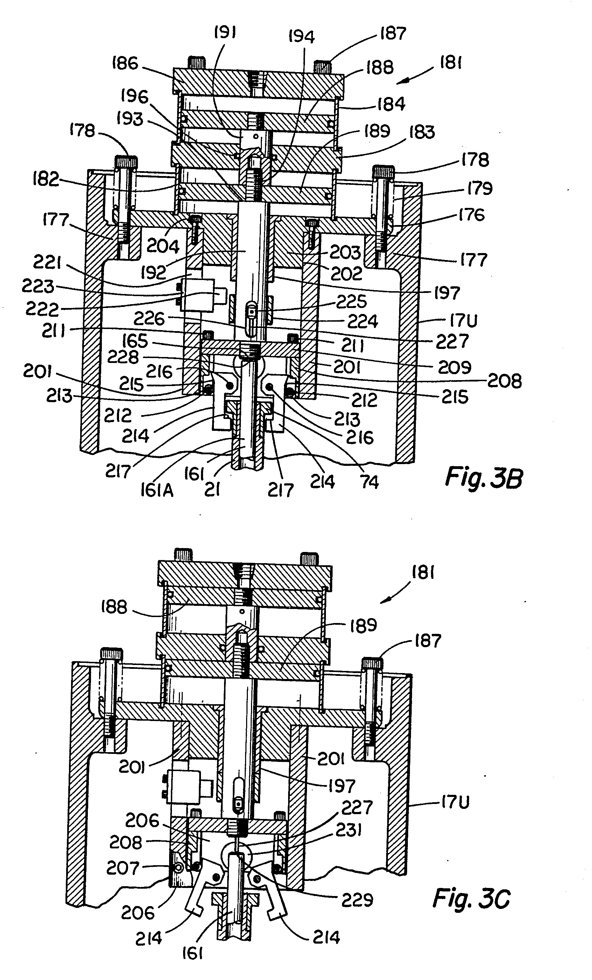

3B. In FIG. 3B we see the upper end portion of the collet
release drive bar 161, particularly that portion thereof
projecting out of the flange nut 74 at the upper end of
the spindle 21. We also see a continuation upward of the
head casting 17U. It is to be noted that FIG. 3B and FIG.
3C are viewed in the direction 90 degrees from the view of FIG. 3A. This is to enable better illustration of the release assembly.

The release assembly includes a cylinder base 176 mounted on inwardly directed flanges 177 on the upper walls of the head casting 17U. Four cap screws 178 serve this purpose as they are threadedly received into the flanges 177. These are shoulder screws which limit the extent of their reception in the flanges to an amount which suitably compresses the coil cushion springs 179 disposed under the cap screw heads and on top of the cylinder base 176. A pneumatic cylinder assembly 181 is mounted to the cylinder base. It includes a lower cylinder tube 182 received in a groove in the base, an intermediate platen 183 having a groove in its underside received on tube 182 and having a similar groove on its top side receiving cylinder tube 184. A cylinder head or cap 186 is fastened atop this stack by four cap screws 187 threaded into the cylinder base 176. Two cylinders are thereby provided. A piston 188 is in the upper cylinder and another piston 189 in the lower cylinder. O-rings are provided in the peripheral grooves of these pistons and seal against the cylinder walls. An upper piston shaft or rod 191 is threaded into and thereby secured to the upper piston 188. A lower piston shaft or rod 192 has a shoulder 193 abuttingly engaging the bottom of the piston 189. A threaded stem 194 is threaded into and thereby secured to the upper piston shaft 191 and thereby clamps the lower piston 189 between the upper and lower shafts. An O-ring seal 196 seals the upper piston shaft in the platen 183. A bushing 197 secured in the cylinder base guidingly receives the lower piston shaft or rod 192.

Each of the upper and lower cylinders is a double acting air cylinder and they are operated simultaneously. FIG. 3B shows them in mid stroke whereupon air would be applied simultaneously above upper and lower pistons 188 and 189, respectively. FIG. 3C shows both pistons at top full stroke wherein air is applied to the underside of both pistons and vented from the top side of both pistons. This is accomplished by conventional valving (not shown).

A pair of guide frames or trusses 201 is provided on opposite faces 202 of a rectangular boss 203 which projects down from the bottom of the cylinder base 176. These trusses are secured to the cylinder base by cap screws 204 received in holes in the cylinder base and threaded into the upper ends of the trusses 201. These are socket head cap screws and secured in the cylinder base before the cylinder assembly is mounted to the base. The lower ends of the trusses are bridged by a pair of spacer plates 206 which are secured to the trusses by cap screws 207. Accordingly, the combination of the two trusses 201 at the ends with the two spacer plates 206 on the sides provides a rectangular box. Two "gripper actuator" blocks 208 are located in the box, one at each side of the threaded lower end of the piston rod 192. A support bar 209 is threaded to the lower end of the piston rod. Each of the blocks 208 is fastened to the support bar by two cap screws 211 threaded into the block. Axles 212 are secured in the actuator blocks. Each axle has a roller 213 mounted thereon.

Two "gripper" fingers 214 are pivotally mounted on shafts 216 which are secured in the bridging plates 206. These fingers are pivotable between the closed position shown in FIG. 3B and the open position shown in FIG. 3C. As shown in Figs. 3A and 3B, the fingers have hook or stop portions 217 under the flange of the flange nut 74. Accordingly, they can serve as latches to stop downward movement of the spindle for a purpose which will be described.

Further referring to the structure in Fig. 3B, a hole 221 is provided in the wall of one of the trusses 201 and receives a proximity switch 222 therethrough which is mounted to the truss by a bracket 223. This switch can be of the same type as described above for switch 134. To cooperate with this switch and provide an indication of whether or not a tool holder is in the collet, a cylindrical steel sleeve 224 is slidably received on the piston rod 192. A longitudinally extending transverse aperture 226 is provided in the piston rod and a key 225 secured to the sleeve 224 extends through this aperture from one side to the other side of the piston rod. A sensor pin 227 having its axis colinear with the axis of the piston rod, is threadedly received in the key 225 and secured to it. It extends downward through a central aperture in piston rod 192 from the slot 226 down to the lower end 228 of the piston rod. As shown in FIG. 3C, where the piston rod is fully up, the pin 227 is adjusted in the key 225 so that the lower end 229 of the pin projects below the lower end 228 of the piston rod a certain distance, such as .494 inches for example. This adjustment is facilitated in the assembly by a sighting and access clearance hole 231 provided in each of the two side plates 206. The adjustment is such that if the pin 227 is pushed upward in the piston rod a distance of .031 inches, the proximity or sensor switch will be tripped. This will occur if there is no tool holder in the collet when the quill is raised to the upper limit of its travel. Because of the absence of a tool holder in the collet, the collet will rise an extra .060 inches in the spindle until stopped by the collet limit key 162 engaging the upper end of the slots 163, 164 in the spindle. So when the quill has been raised to the upper limit of its travel, the upper end 229 of rod 161 being higher by .060 inches, will push the pin upward in piston rod 192. The sleeve 224 rising .060 inches higher will cause sensor 222 to be tripped so this sensor will indicate to the machine that there is no tool holder in the collet.

Referring again to FIG. 2, a tool changer is shown generally at 230 secured to the side of the head 17. Various tool changers can be used with this invention. The preferred type is one in which a tool holder transfer finger or claw assembly removes a tool holder with tool therein from a storage magazine, and delivers it into the spindle in an axial direction along the axis of the spindle without the need for axial movement of the spindle at all. An example is the automatic tool changer incorporated on the Hurco Model MBII CNC Machining Center manufactured by Hurco Manufacturing Company, Inc. of Indianapolis, Indiana.

## Operation

A description of operation can be conveniently started by considering the condition of the mechanism with the tool holder and tool in place in the spindle as in FIG. 1. If the spindle is fully up, the spindle and quill will be in the position shown in FIG. 3A and 3B. The pistons and gripper assembly will be in the fully up position as shown in FIG. 3C, unless the equipment is calling for a change of tools. The vertical upward travel of the quill is limited by the vertical servo drive in response to the tripping of a Z-axis limit switch 237 triggered by a lug or pin 232 on the quill support casting as it rises. At this time, the coil spring load on the collet holding the collet closed on the tool retention knob is approximately one thousand pounds. For doing further work on the workpiece 10 secured on the worktable, the spindle drive motor is turned on and the quill is driven downward by the Z-axis servo motor as needed to perform the needed operations with the tool 47, with appropriate movements of the worktable 19 in the X-axis direction on the saddle 18 and the saddle 18 in the Y-axis direction on the knee 13.

When a tool change is to be made, the spindle motor speed is reduced, and the quill is raised. At a very low speed of the spindle, the shot pin air cylinder 119 is activated to drive the shot pin into engagement with the upper face 113 of the flange disk 102. This occurs when the spindle is turning in the clockwise direction of arrow 233 (FIG. 4) and is 60° to 70° from the detent 104. As the spindle continues to rotate, with the rounded end of the shot pin engaging the top of the disk, as it moves across the end of the lubricator button 111, it is lubricated. It moves on from there into the detent 104 whereupon it rigidly stops the spindle in the correct rotational index position. In this position, the key slot of the tool holder in the spindle and which is to receive the index key of the tool changer finger, is in the correct position for doing so. The empty tool changer fingers then move to position to grip the tool holder flange, the key on one finger being thereupon received in the notch in the flange.

When the vertical (Z-axis) servo drive has driven the quill to the uppermost position as shown in FIG. 3A, the Z-axis limit switch tells the controller that the assembly is in position to open the collet. The shot pin sensor switch 134, being activated when the shot pin enters the detent, tells the controller that the shot pin is in position so the correct index position has been established. The existence of a tool holder in the collet prevents the collet from rising sufficiently for the upper end of collet release bar 161 to move the tool sensor pin 229 up far enough for the ring or collar 224 to trip the sensor switch 222. Accordingly, the controller is informed that the collet is securing a tool holder.

With the tool changer gripping fingers on the tool holder flange, air is applied to the tool release cylinders, thus moving the piston rod downward and thereby moving the gripper actuator blocks 208 downward. This moves rollers 213 down the cam ramps 215 on the gripper fingers and onto the straight portions thereof, thus closing the fingers to provide the hook portions thereof under the flange nut 74 atop the spindle. Further downward movement engages the lower end 228 of the piston rod with the upper end 229 of the collet release push rod 161. Further downward movement of the pistons drives the release bar downward against the load of the coil spring 173. In contrast to a Belleville washer stack, the spring rate of the coil spring is relatively low. Therefore, a piston force of a couple hundred pounds over the collet closed load of the spring will move the collet downward as much as needed to open the fingers. As this occurs, the cylinder base 176 may move slightly off the support flanges 177 against the load of the springs 179 under the mounting screws 178. The extent of this movement, which is a vertical movement of the base relative to the spindle, and could thus defeat the opening function of the collet, is limited by the engagement of the hook abutments 217 of the gripper fingers with the underside of the flange of the flange nut 74. Further driving of the pistons downward by air in the cylinders will drive the collet downward relative to the spindle until the pilot surfaces 151 of the collet fingers move into the space 154 in the spindle, thus opening the collet and releasing the tool holder retention knob 46. Thereupon the tool changer fingers can pull the tool holder out of the spindle and return the tool holder to a storage magazine.

Air pressure remains applied on the tool release pistons. Consequently the collet remains open until the tool changer fingers deliver a new tool holder to the spindle. When that occurs, and the controller is signaled by the tool changer that the fingers have delivered a new tool holder to the spindle, air pressure is released from the top of the pistons in the cylinders, and applied under the pistons in the cylinders. The collet return spring 173 promptly closes the collet, the cylinder base 176 again settles on the flanges 177 if still separated at all from them, and the spindle retaining finger cam rollers 213 ride up the outer edge of the fingers. Upon reaching the inclines of the cam ramps 215, the rollers open the fingers to the position shown in FIG. 3C as the rollers ride up the ramps.

The tool changer fingers move away from the tool holder, the pressure on the shot pin cylinder 19 is reversed, pulling the shot pin up out of the detent and clear from the disk. This event is recognized by the sensor 134, whereupon spindle drive can resume and Z-axis servo operation can drive the quill and thereby the spindle downward to resume work on a workpiece.

The present construction has a number of advantages. The spindle locking enables the use of a conventional spindle drive pulley, but with a new flange according to the present invention to serve not only as the pulley flange, but also as a reliable precise spindle stop indexing device. The axially drivable shot pin cooperating with this pulley minimizes space utilization, particularly in a radial direction. It utilizes space which is necessary anyway. Lubrication of the shot pin in the manner provided, minimizes wear and improves reliability.

The use of the coil spring, for which a die spring may serve very well as described above, provides adequate collet closing force. At the same time, in contrast to a stack of Belleville washers, it can be conveniently used externally of the spindle, thus, simplifying construction. More significantly, because the increase of force during collet travel and spring compression is linear with distance and relatively low, it enables the use of a release actuator of less capacity and, therefore, less size and/or pressure requirement than the actuators required for release of Belleville loaded collets. As an example, one embodiment of the present invention was designed for a spring force of 1,000 pounds holding the collet closed. Longitudinal movement of the collet relative to the spindle, required to open the collet, was 5/16 inch. The increase in coil spring force for this deflection was 394 pounds. The increase in Belleville spring force for this deflection was 864 pounds, and rising at a much greater rate than the rate for the coil spring. The effective spring rate for the coil spring was 1,260 pounds per inch. That for the Belleville stack was more than twice as high.

In addition to the foregoing, the structure of the present invention avoids the necessity of securing the collet release mechanism to the quill, thus avoiding the additional complexity of flexible fluid couplings in the head, and considerably reducing the load handled by the Z-axis servo drive assembly.

While the invention has been illustrated and described in detail in the drawings and foregoing description, the same is to be considered as illustrative and not restrictive in character, it being understood that only the preferred embodiment has been shown and described and that all changes and modifications that come within the spirit of the invention are desired to be protected.

CLAIMS:

1.    A machine tool comprising:

base means;

head means mounted on said base means and supporting tool receiving and actuating means,

said spindle means including;

tool retainer collet means linearly movable in said spindle means to alternately close and open a portion of the collet means to, respectively, grip and release tool means in said spindle means, and

collet actuating spring means having a spring rate less than half that of Belleville washers and urging said collet means in a collet closing direction.

2.    The machine tool of claim 1 wherein the spindle means includes a spindle rotatable about a rotational axis, the machine tool further comprising:

a disc secured to the spindle and extending radially from said rotational axis;

a spindle stopping plunger having an end engageable with the disc, said disc having a plunger receiver detent therein, said plunger being operable, when actuated, to engage said end with a surface of the disc and, while the disc is rotating, enter the said detent and thereupon stop the rotation of the disc.

3.     The machine tool of claim 2 and further comprising:

a plunger lubricator in the disc at a radius from the rotational axis equal to the distance of said plunger end from said rotational axis when said plunger is actuated and said end engages said surface, whereby said lubricator is engaged by the plunger when actuated as the disc rotates.

4.     The machine tool of claim 1 wherein said spindle means further includes:

quill means linearly movable in said head means;

a spindle longitudinally confined by said quill means and rotatable about a longitudinal axis in said quill means and having a tool receiving end, said collet means being guidingly received in and guided by said spindle and longitudinally movable in the spindle to alternately grip and release a pull knob of a tool holder in the spindle.

5.     The machine tool of claim 4 wherein said spindle means further includes:

an annular space between a portion of the spindle and a portion of the interior of the quill means and receiving said spring means therein.

6.    The machine tool of claim 5 wherein said spindle means further includes:

first and second spring seat collars received on said spindle portion, said spring means including a coil spring coaxial with said spindle portion and surrounding said spindle portion and compressively confined between and resiliently bearing on said collars, one of said collars being stopped longitudinally in a first direction by said quill means,

a transverse aperture through said spindle adjacent the other of said collars,

said collet means having a transverse aperture therethrough registering with said transverse aperture in said spindle,

a key extending through said apertures, the other of said collars being stopped longitudinally in a second direction opposite said first direction by said key bearing on said other collar and on an end margin of one of said apertures.

7.    The machine tool of claim 6 wherein:

at least one of said apertures is longer than the other of said apertures in a direction of said rotational axis to accommodate motion of said key axially relative to one of said spindle and collet means in an amount at least as much as the longitudinal movement of said collet means in and relative to said spindle required to respectively grip and release said pull knob of a tool holder in the spindle.

8. The machine tool of claim 7 wherein:

said one aperture is in said spindle,

said other aperture is in said collet means,

said key is slip fitted in said other aperture,

an end margin of said one apertures is closely spaced to an edge of said key and operable, in absence of tool means in said spindle, to stop spring-urged collet-closing movement of said collet means in said second direction.

9. The machine tool of claim 4 and further comprising:

a radial flange at the end of said spindle opposite the tool receiving end of the spindle;

flange latching means in the said head means and operable, when actuated, to enter into latching relationship with the said flange to limit axial movement of the spindle in the head means; and

a fluid powered actuator coupled to said latching means and normally holding said latching means in an open unlatching position and operable, when actuated, to close said latching means on said flange and drive said collet means longitudinally relative to said spindle to collet opening position.

-26-

10. The machine tool of claim 1 and having release means which include:

retaining means for retaining said spindle means; and

powered means movable relative to said retaining means and engageable with said collet means to move said collet means in collet opening direction while said retaining means limits movement of said spindle means.

11. The machine tool of claim 10 wherein:

said retaining means include latch means, said machine tool further comprising:

operator means coupled to said powered means and operable by said powered means to operate said latch means prior to movement of said collet means in said collet opening direction.

12. The machine tool of claim 11 wherein:

said operator means include rollers, and

said latch means include fingers engaged by said rollers, said fingers having cam ramps thereon.

13. The machine tool of claim 12 wherein:

said powered means includes a fluid powered cylinder assembly having a cylinder base resting on said head means, said cylinder assembly being secured to said base means, and

-27-

resilient means are coupled to said head means and resiliently urge said base against stop means in said head means.

14. The method of holding and releasing a tool holder in a collet and comprising the steps of:

raising a tool spindle quill from an operating position to a tool release position to place a retainer flange of a collet sleeve and cam in position for engagement and gripping by retainer fingers connected to the stationary portion of the machine tool;

closing the retainer fingers on the flange;

forcing a collet operating rod downward while retaining the sleeve by engagement of the fingers with said flange to force the collet downward in the sleeve to release a tool holder from the collet;

removing the tool holder from the collet;

placing another tool holder in the collet;

removing downward force from the collet while applying upward spring force on the collet to permit the spring force to close the collet on said another tool holder;

releasing said retainer fingers from said flange to permit said collet sleeve with collet to move downward to enable a tool in said tool holder to work on a workpiece.

15.    The method of claim 13 and further comprising the steps of:

engaging the end of the plunger with a radially extending surface secured to the spindle, while the spindle is rotating;   and

inserting the plunger in a detent in the surface to stop the rotation of the spindle in a predetermined index position,

lubricating the end of the plunger and

contacting the end of the plunger with a lubricant impregnated slug exposed at said surface, as said spindle rotates,

applying plunger advancing air pressure on an air cylinder to stop the spindle;   and

releasing said plunger by applying plunger releasing air pressure to the said air cylinder.

Fig. 1

Fig. 2

Fig. 3A

0104008

3 / 4

*Fig. 3B*

*Fig. 3C*

Fig. 4

Fig. 5

Fig. 6

Fig. 7

European Patent
Office

**EUROPEAN SEARCH REPORT**

Application number

| | DOCUMENTS CONSIDERED TO BE RELEVANT | | EP 83304935.6 | |
|---|---|---|---|---|
| Category | Citation of document with indication, where appropriate, of relevant passages | Relevant to claim | CLASSIFICATION OF THE APPLICATION (Int. Cl. ³) | |
| A,D | US - A - 4 304 513 (ROCH) <br> * Totality * <br> -- | 1 | B 23 C 5/26 | |
| A | WO - A1 - 81/02 401 (GIDDINGS) <br> * Totality * <br> -- | 1 | | |
| A | US - A 4 008 646 (HAGUE) <br> * Totality * <br> -- | 1 | | |
| A | US - A - 4 175 898 (WOOD) <br> * Totality * <br> ---- | 1 | | |
| | | | **TECHNICAL FIELDS SEARCHED (Int. Cl ³)** | |
| | | | B 23 C 5/00 <br> B 23 Q 1/00 | |

The present search report has been drawn up for all claims

| Place of search | Date of completion of the search | Examiner |
|---|---|---|
| VIENNA | 29-11-1983 | FUCHS |